# EUROPEAN PATENT APPLICATION

(11) **EP 4 410 538 A1**
(43) Date of publication of application: **07.08.2024**
(21) Application number: 22875969.2
(22) Date of filing: 21.09.2022
(51) Int. Cl.: B32B 9/00, B65D 65/40

(54) **MULTILAYER FILM, MULTILAYER BODY AND PACKAGE**

(30) Priority: 30.09.2021 JP 2021161268
(71) Applicant: Toyobo Co., Ltd., Kita-ku Osaka-shi, Osaka 530-0001 (JP)
(72) Inventor: TASAKI, Natsumi, Inuyama-shi, Aichi 484-8508 (JP); YAMAZAKI, Atsushi, Inuyama-shi, Aichi 484-8508 (JP)
(74) Representative: Vossius & Partner Patentanwälte Rechtsanwälte mbB
(86) International application number: PCT/JP2022/035138
(87) International publication number: WO 2023/054102

(57) **Abstract**

There are vapor-deposited films exhibiting various heat shrinkable properties depending on the base film. In a case where a laminate product is fabricated using a vapor-deposited film having a high heat shrinkage rate in the machine direction and subjected to retorting, the barrier properties may deteriorate. Improvement using base films has the disadvantage that a special brand is required to be established since the production quantity at one time is large. The water vapor transmission rate after retorting can be suppressed to 2.5 g/m²·day or less by providing a laminated body having a shrinkage rate in the MD direction before and after retorting of 1.2% or less in the transverse direction and a difference Δ between the maximum MD shrinkage rate and the minimum MD shrinkage rate in the transverse direction of 0.4% or less.

## Description

### TECHNICAL FIELD

The present invention relates to a laminated film used in the packaging fields of foods, pharmaceuticals, and industrial products and the like. More specifically, the present invention relates to a laminated film that can exert favorable gas barrier properties and close contact properties as a result by controlling the physical properties of the film when a gas barrier laminated film including an inorganic thin film layer is formed.

### BACKGROUND ART

Packaging materials used for food products, pharmaceuticals and the like are required to be equipped with a property of blocking gases such as oxygen and water vapor, namely, gas barrier properties in order to suppress the oxidation of proteins and fats, to preserve the taste and freshness, and to maintain the efficacy of pharmaceutical products. Gas barrier materials used in electronic devices such as solar cells and organic EL, electronic parts, and the like are required to exhibit higher gas barrier properties than packaging materials for food products.

Hitherto, in food product applications that require blocking of various gases such as water vapor and oxygen, gas barrier laminated films in which metal thin films formed of aluminum and the like and inorganic thin films formed of inorganic oxides such as silicon oxide and aluminum oxide are formed on the surface of substrate films formed of plastics are generally used. Among these, those in which thin films of inorganic oxides such as silicon oxide, aluminum oxide, and a mixture thereof are formed on the surface of substrate films are widely used since these gas barrier laminated films are transparent and the contents are visible.

However, since inorganic thin films lack flexibility, there are problems that pinholes and defects are likely be generated and gas barrier properties decrease when the film is bent or subjected to impact and further when the film is subjected to high-temperature treatment such as retorting.

To solve the above problem, it has been attempted to further provide a protective layer on the inorganic thin film. For example, laminated films in which a resin formed of a water-soluble polymer or a solvent-soluble resin is provided on an inorganic thin film are known, and the stability of gas barrier properties can be improved.

However, these laminated films have various heat shrinkage rates depending on the position of the substrate film and the winding conditions during lamination of the inorganic thin film. In a case where a laminate product is fabricated by bonding a sealant layer using a laminated film having a high heat shrinkage rate and subjected to retorting, there is a problem that the laminate product expands and contracts by high heat-moisture treatment, tensile stress and compressive stress is applied to the gas barrier layer to cause cracking, and the barrier performance decreases.

Against this background, a method is known in which a covering layer such as an inline coating layer or an anchor coating layer is provided on a substrate film to maintain gas barrier properties and close contact properties after heat-moisture treatment as well (Patent Documents 1 and 2). A method is known in which a substrate film containing a polyester resin of which the main constitutional unit is a butylene terephthalate unit is used to improve flexibility of the substrate itself and maintain favorable gas barrier properties after heat-moisture treatment as well (Patent Documents 3 and 4). A method is known in which a laminated film of a shrink film and a polyamide film is used to adjust the shrinkage rate and maintain favorable gas barrier properties after hot water treatment as well (Patent Document 5).

However, in any of the above-mentioned methods, it is necessary to change the raw material of the substrate film itself, it is necessary to have a dedicated lot, and there is a problem that it is not possible to cope with a wide variety of products and small lots.

Furthermore, a method is also known in which the heat shrinkage rate can be controlled and the interlayer close contact strength can be improved by the step of drying the substrate (Patent Document 6). However, heat-moisture treatment is not mentioned.

There is also a problem that in a case where a wide laminated film is formed, gas barrier properties decrease as pinholes and defects are generated in the inorganic thin film by the difference in heat shrinkage rate in the transverse direction due to the substrate film when the wide laminated film is subjected to high-temperature treatment such as retorting.

### PRIOR ART DOCUMENTS

### PATENT DOCUMENT

Patent Document 1: JP-B-6631098
Patent Document 2: JP-B-6507847
Patent Document 3: JP-A-2019-14043
Patent Document 4: JP-B-6879292
Patent Document 5: JP-A-2018-89800
Patent Document 6: JP-A-2017-144593

### SUMMARY OF THE INVENTION

### PROBLEMS TO BE SOLVED BY THE INVENTION

An object of the present invention is to provide a laminated film that exhibits favorable gas barrier properties so as to have little variation in gas barrier properties in the transverse direction after retorting as well as to exhibit favorable gas barrier properties when formed into a wide laminated film.

### MEANS FOR SOLVING THE PROBLEMS

The present inventors have found out that a laminated film having a desired heat shrinkage rate at the end of coating can be fabricated and further can maintain gas barrier properties when subjected to retorting by setting the film surface temperature to the retorting temperature or higher and controlling the tension during the application process of the protective layer.

In other words, the present invention has the following configuration.
(1) A laminated film exhibiting gas barrier properties, the laminated film comprising:
   a resin substrate;
   an inorganic thin film layer laminated on at least one side of the resin substrate; and
   a protective layer laminated on the inorganic thin film layer, wherein
   the following requirements (I) to (III) are satisfied:
      (I) a layer is not provided between the resin substrate and the inorganic thin film layer,
      (II) a heat shrinkage rate in an MD direction before and after retorting at 130°C for 30 minutes is 1.2% or less, and
      (III) a water vapor transmission rate is 2.5 g/m²·day or less after a 15 µm biaxially stretched nylon film and a 70 µm unstretched polypropylene film are coated with a polyurethane-based two-component curable adhesive in a thickness of 4 µm after drying, bonded together by a dry lamination method, and laminated on a protective layer surface of the laminated film, aging is performed at a temperature of 40°C for 4 days, and then a heat-moisture treatment is performed at 130°C for 30 minutes.
(2) The laminated film according to (1), wherein the laminated film has a film width of 1,000 mm or more and a difference Δ between a maximum MD shrinkage rate and a minimum MD shrinkage rate in a transverse direction of 0.4% or less during retorting at 130°C for 30 minutes.
(3) The laminated film according to (1) or (2), wherein the inorganic thin film layer contains at least one or more kinds of inorganic oxides including silicon oxide and/or aluminum oxide.
(4) The laminated film according to any one of (1) to (3), wherein the protective layer contains at least one or more kinds of urethane resins or ester resins.
(5) The laminated film according to any one of (1) to (4), wherein the protective layer contains a silane coupling agent.
(6) A laminated body comprising a heat seal layer laminated on a protective layer surface of the laminated film according to any one of (1) to (5).
(7) A package comprising the laminated body according to (6) at least at a part.

### EFFECT OF THE INVENTION

According to the present invention, it is possible to obtain a laminated film having a desired heat shrinkage rate at the end of coating as well as exhibiting favorable gas barrier properties when formed into a wide laminated film, and to maintain favorable gas barrier properties so that variation in gas barrier properties in the transverse direction is little when retorting is performed as well.

### MODE FOR CARRYING OUT THE INVENTION

The laminated film of the present invention is a laminated film exhibiting gas barrier properties, the laminated film including: a resin substrate; an inorganic thin film layer laminated on at least one side of the resin substrate; and a protective layer laminated on the inorganic thin film layer, in which a difference Δ between a maximum MD shrinkage rate and a minimum MD shrinkage rate in a film transverse direction is 0.4% or less during retorting at 130°C for 30 minutes, and a maximum water vapor transmission rate in a transverse direction is 2.5 g/m²·day or less after a 15 µm biaxially stretched nylon film and a 70 µm unstretched polypropylene film are coated with a polyurethane-based two-component curable adhesive in a thickness of 4 µm after drying, bonded together by a dry lamination method, and laminated on a protective layer surface of the laminated film to fabricate a laminated body and the laminated body is aged at a temperature of 40°C for 4 days and then subjected to a heat-moisture treatment at 130°C for 30 minutes. First, the plastic substrate film will be explained, and the inorganic thin film layer and protective layer laminated thereon and further other layers will be subsequently explained.

### [Substrate film]

As the substrate film used in the present invention (hereinafter referred to as "substrate film" in some cases), for example, it is possible to use a stretched film obtained by melt-extruding a plastic, and if necessary, subjecting the extruded product to stretching in the machine direction (MD direction) and/or transverse direction (TD direction), cooling, and heat-setting. A biaxially stretched film that has been stretched in the machine direction and transverse direction is preferable from the viewpoint of obtaining mechanical strength. Examples of the plastic include polyvinyl chloride, polyvinylidene chloride, polyvinyl alcohol, wholly aromatic polyamide, polyamideimide, polyimide, polyetherimide, polysulfone, polystyrene, and polylactic acid in addition to polyamides typified by nylon 4/6, nylon 6, nylon 6/6, and nylon 12; polyesters typified by polyethylene terephthalate, polybutylene terephthalate, and polyethylene-2,6-naphthalate; and polyolefins typified by polyethylene, polypropylene, and polybutene. Among these, polyester is preferable from the viewpoint of heat resistance, dimensional stability, and transparency, and polyethylene terephthalate and copolymers obtained by copolymerizing polyethylene terephthalate with other components are particularly preferable.

As the substrate film, a film having an arbitrary thickness can be used depending on the desired purpose and applications such as mechanical strength and transparency. The film thickness is not particularly limited, but is usually recommended to be 5 to 250 µm, and is desirably 10 to 60 µm in the case of using the laminated film as a packaging material. The width of the substrate film is preferably 1000 mm or more and 5000 mm or less, still more preferably 3,000 mm or less, more preferably 2,000 mm or less from the viewpoint of handling during processing, post-process, and machine cost. The transparency of the substrate film is not particularly limited, but the light transmittance of the substrate film is desirably 50% or more in the case of using the laminated film as a packaging material required to exhibit transparency.

The substrate film may be a single-layer type film formed of one kind of plastic, or may be a laminated type film in which two or more kinds of plastic films are laminated. The kind, lamination number, lamination method, and the like of the laminated film in the case of forming a laminated type film are not particularly limited, and can be arbitrarily selected from known methods depending on the purpose. The substrate film may be subjected to surface treatments such as a corona discharge treatment, a glow discharge treatment, a flame treatment, and a surface roughening treatment and also subjected to known anchor coating treatment, printing, decoration, and the like as long as the object of the present invention is not impaired.

The MD shrinkage rate is the shrinkage rate in the machine direction, namely, longitudinal direction, and the TD shrinkage rate is the shrinkage rate in the transverse direction, namely, lateral direction.

The initial MD heat shrinkage rate of the substrate film to be used before and after retorting at 130°C for 30 minutes is required to be 1.6% or less, and is usually preferably 1.5% or less, still more preferably 1.4% or less. The difference Δ in MD heat shrinkage rate in the transverse direction is preferably 0.6% or less, still more preferably 0.5% or less, more preferably 0.4% or less. The TD heat shrinkage rate is preferably -0.6% or more, still more preferably -0.5% or more, more preferably -0.4% or more.

### [Inorganic thin film layer]

The laminated film of the present invention has an inorganic thin film layer on the substrate film. The inorganic thin film layer is directly laminated on the resin substrate, and any layer is not provided between the two layers.

The inorganic thin film layer is a thin film made of a metal or an inorganic oxide. The material for forming the inorganic thin film layer is not particularly limited as long as the material can be made into a thin film, but from the viewpoint of gas barrier properties, inorganic oxides such as aluminum oxide (alumina), silicon oxide (silica), and mixtures of silicon oxide and aluminum oxide are preferable. In particular, from the viewpoint of productivity, aluminum oxide is preferable. A laminated film having a configuration in which a predetermined protective layer of the present application to be described later and an inorganic thin film layer formed of aluminum oxide are combined is preferable since the laminated film has a remarkable effect of improving particularly the oxygen transmission rate after acid treatment and water attached lamination strength. The silicon oxide as used herein is various silicon oxides such as SiO and SiO₂, or a mixture thereof, and the aluminum oxide as used herein is various aluminum oxides such as AlO and Al₂O₃, or a mixture thereof.

The film thickness of the inorganic thin film layer is usually 1 to 100 nm, preferably 3 to 50 nm, still more preferably 5 to 20 nm. If the film thickness of the inorganic thin film layer is less than 1 nm, satisfactory gas barrier properties may be less likely to be obtained. Meanwhile, even if the film thickness exceeds 100 nm such that the inorganic thin film layer is excessively thickened, the gas barrier properties-improving effect equivalent to such increase in the thickness cannot be obtained, and such a film thickness is rather disadvantageous in terms of flex resistance and production cost.

The method for forming the inorganic thin film layer is not particularly limited, and known vapor-deposition methods, for example, physical vapor-deposition methods (PVD methods) such as a vacuum vapor-deposition method, a sputtering method, and an ion plating method, or chemical vapor-deposition methods (CVD methods) may be adopted as appropriate. Hereinafter, a typical method for forming the inorganic thin film layer will be described by taking a aluminum oxide based thin film as an example. For example, in the case of adopting a vacuum vapor-deposition method, Al₂O₃ or Al is preferably used as the vapor-deposition starting material. Normally, particles are used as these vapor-deposition raw materials. In this case, the size of each particle is desirably a size that does not change the pressure during vapor-deposition, and a preferable particle size is 1 mm to 5 mm. For heating, systems such as resistive heating, high frequency induction heating, electron beam heating, and laser heating can be adopted. It is also possible to adopt reactive vapor-deposition in which oxygen, nitrogen, hydrogen, argon, carbon dioxide gas, or water vapor or the like is introduced as a reaction gas or a means such as ozone addition or ion assist is used. Furthermore, film production conditions such as applying a bias to a body to be vapor-deposited (laminated film to be vapor-deposited) and heating or cooling the body to be vapor-deposited can also be optionally changed. Similarly, the vapor-deposition materials, the reaction gases, the application of a bias to the body to be vapor-deposited, and the heating/cooling and the like can be changed even when a sputtering method or a CVD method is adopted.

### [Protective layer]

In the present invention, a protective layer is provided on the inorganic thin film layer. The inorganic thin film layer laminated on the plastic film is not a completely dense film but has dotted minute deficient moieties. By applying a specific resin composition for protective layer to be described later onto the inorganic thin film layer to form a protective layer, the resin in the resin composition for protective layer invades the deficient moieties of the inorganic thin film layer, and as a result, an effect of stabilizing the gas barrier properties is obtained. Additionally, by using a material exhibiting gas barrier properties in the protective layer itself as well, the gas barrier performance of the laminated film can also be greatly improved.

In the present invention, the amount of the protective layer applied is preferably 0.05 to 0.60 g/m². This makes it possible to reduce coating unevenness and defects by uniformity as well as enhance the adhesive properties by the anchor effect. The cohesive force of the protective layer itself is improved, and the close contact properties between the inorganic thin film layer and the protective layer become firm, and water resistance can also be enhanced. The amount of the protective layer applied is preferably 0.08 g/m² or more, more preferably 0.10 g/m² or more, still more preferably 0.15 g/m² or more and is preferably 0.50 g/m² or less, more preferably 0.45 g/m² or less, still more preferably 0.40 g/m² or less. When the amount of the protective layer applied exceeds 0.60 g/m², the gas barrier properties are improved, but the cohesive force inside the protective layer is insufficient, and there is a risk that the close contact may decrease. There is also a case where unevenness and defects in the coating appearance occur, and gas barrier properties and adhesive properties cannot be sufficiently exerted after heat-moisture treatment. Meanwhile, when the film thickness of the protective layer is less than 0.10 g/m², sufficient gas barrier properties, interlayer close contact properties, and ink permeability may not be obtained.

As a component of the protective layer, either of a solvent-dispersed resin or a water-dispersed resin may be used. In particular, in order to improve the close contact properties between the protective layer and the inorganic thin film layer, a solvent-dispersed resin is preferable. In order to obtain high gas barrier properties, a resin composed of a polyester polyol component obtained by reacting a dicarboxylic acid and a polyhydric alcohol and a polyisocyanate component is preferable.

### (A) Polyester component

The polyester component is obtained by reacting a polycarboxylic acid and a polyhydric alcohol.

The polycarboxylic acid includes aromatic polycarboxylic acids, alicyclic polycarboxylic acids, aliphatic polycarboxylic acids, and the like. From the viewpoint of gas barrier properties, aromatic polycarboxylic acids are preferable. Examples thereof include orthophthalic acid, isophthalic acid, terephthalic acid, 1,2-naphthalene dicarboxylic acid, 2,3-naphthalene dicarboxylic acid, anthracene-1,2-dicarboxylic acid, and anthraquinone-2,3-dicarboxylic acid.

As the polyhydric alcohol, from low molecular weight glycols to high molecular weight alcohols can be used, but low molecular weight glycols such as alkylene glycols (for example, linear or branched C2-10 alkylene glycols such as ethylene glycol, propylene glycol, trimethylene glycol, 1,3-butanediol, 1,4-butanediol, pentanediol, hexanediol, neopentyl glycol, heptanediol and octanediol) and (poly)oxy C2-4 alkylene glycols (diethylene glycol, triethylene glycol, tetraethylene glycol, dipropylene glycol, and the like) are used from the viewpoint of gas barrier properties and flexibility due to amorphous moieties, preferable glycol components are C2-8 polyol components [for example, C2-6 alkylene glycols (particularly, ethylene glycol, 1,2- or 1,3-propylene glycol, 1,4-butanediol, 1,6-hexanediol, and 3-methyl-1,5-pentanediol)] and di- or trioxy C2-3 alkylene glycols (diethylene glycol, triethylene glycol, dipropylene glycol, and the like), and particularly preferable diol components are C2-8 alkylene glycols (particularly C2-6 alkylene glycols).

These diol components can be used singly or in combination of two or more kinds thereof. If necessary, low molecular weight diol components such as aromatic diols (for example, bisphenol A, bishydroxyethyl terephthalate, catechol, resorcinol, hydroquinone, 1,3- or 1,4-xylylene diol or mixtures thereof) and alicyclic diols (for example, hydrogenated bisphenol A, xylylene diol, cyclohexanediol, and cyclohexanedimethanol) may be used concurrently. Furthermore, if necessary, trifunctional or higher functional polyol components, for example, glycerin, trimethylolethane, trimethylolpropane, polyester polyol, polycarbonate polyol, and polyether polyol can also be used concurrently. The polyol component preferably includes at least a C2-8 polyol component (particularly a C2-6 alkylene glycol).

### (B) Polyisocyanate component

The polyisocyanate component includes aromatic polyisocyanates, alicyclic polyisocyanates, aliphatic polyisocyanates, and the like. As the polyisocyanate compound, a diisocyanate compound is usually used.

Examples of the aromatic diisocyanates include tolylene diisocyanate (2,4- and 2,6-tolylene diisocyanates or a mixture thereof) (TDI), phenyl diisocyanates (m- and p-phenylene diisocyanates or a mixture thereof), 4,4'-diphenyl diisocyanate, 1,5-naphthalene diisocyanate (NDI), diphenylmethane diisocyanates (4,4'-, 2,4'-, and 2,2'-diphenylmethane diisocyanates or mixtures thereof) (MDI), 4,4'-toluidine diisocyanate (TODI), and 4,4'-diphenyl ether diisocyanate. Examples of the araliphatic diisocyanates include xylylene diisocyanates (1,3- and 1,4-xylylene diisocyanates or a mixture thereof) (XDI), tetramethylxylylene diisocyanates (1,3- and 1,4-tetramethylxylylene diisocyanates or a mixture thereof) **(TMXDI), and ω,ω'**-diisocyanate-1,4-diethylbenzene.

Examples of the alicyclic diisocyanates include 1,3-cyclopentene diisocyanate, cyclohexane diisocyanates (1,4-cyclohexane diisocyanate and 1,3-cyclohexane diisocyanate), 3-isocyanatomethyl-3,5,5-trimethylcyclohexyl isocyanate (isophorodiisocyanate, IPDI), methylenebis(cyclohexylisocyanate) (4,4'-, 2,4'- or 2,2'-methylenebis(cyclohexylisocyanate)) (hydrogenated MDI), methylcyclohexane diisocyanate (methyl-2,4-cyclohexane diisocyanate, methyl-2,6-cyclohexane diisocyanate), and bis(isocyanatomethyl)cyclohexane (1,3- and 1,4-bis(isocyanatemethyl)cyclohexanes or a mixture thereof) (hydrogenated XDI).

Examples of aliphatic diisocyanates include trimethylene diisocyanate, 1,2-propylene diisocyanate, butylene diisocyanates (tetramethylene diisocyanate, 1,2-butylene diisocyanate, 2,3-butylene diisocyanate, and 1,3-butylene diisocyanate), hexamethylene diisocyanate, pentamethylene diisocyanate, 2,4,4- or 2,2,4-trimethylhexamethylene diisocyanate, and 2,6-diisocyanate methyl caffeate.

A urethane resin is obtained by reacting the polyester component (A) and the polyisocyanate component (B). The weight ratio of the polyester component to the polyisocyanate component is 9 : 1 to 1 : 9 based on the solids. The weight ratio is preferably 8 : 2 to 2 : 8, still more preferably 6 : 4 to 4 : 6.

In the resin composition for protective layer of the present invention, it is preferable to contain a silane coupling agent as described later, but if necessary, various additives may be blended in a range in which the gas barrier properties are not impaired. Examples of the additives include layered inorganic compounds, stabilizers (antioxidants, heat stabilizers, ultraviolet absorbers, and the like), plasticizers, antistatic agents, lubricants, antiblocking agents, colorants, fillers, and crystal nucleating agents.

The silane coupling agent is effective in improving the close contact properties of the protective layer to the inorganic thin film layer. Examples of the silane coupling agent include hydrolyzable alkoxysilane compounds, for example, halogen-containing alkoxysilanes (chloroC2-4alkyltriC1-4alkoxysilanes such as 2-chloroethyltrimethoxysilane, 2-chloroethyltriethoxysilane, 3-chloropropyltrimethoxysilane, and 3-chloropropyltriethoxysilane), alkoxysilanes having epoxy groups [glycidyloxyC2-4alkyltriC1-4alkoxysilanes such as 2-glycidyloxyethyltrimethoxysilane, 2-glycidyloxyethyltriethoxysilane, 3-glycidyloxypropyltrimethoxysilane, and 3-glycidyloxypropyltriethoxysilane, glycidyloxydiC2-4alkyldiC1-4alkoxysilanes such as 3-glycidyloxypropylmethyldimethoxysilane, and 3-glycidyloxypropylmethyldiethoxysilane, (epoxycycloalkyl)C2-4alkyltriC1-4alkoxysilanes such as 2-(3,4-epoxycyclohexyl)ethyltrimethoxysilane, 2-(3,4-epoxycyclohexyl)ethyltriethoxysilane, and 3-(3,4-epoxycyclohexyl)propyltrimethoxysilane, and the like], alkoxysilanes having amino groups [aminoC2-4alkyltriC1-4alkoxysilanes such as 2-aminoethyltrimethoxysilane, 3-aminopropyltrimethoxysilane, and 3-aminopropyltriethoxysilane, aminodiC2-4alkyldiC1-4alkoxysilanes such as 3-aminopropylmethyldimethoxysilane, and 3-aminopropylmethyldiethoxysilane, (2-aminoC2-4alkyl)aminoC2-4alkyltriC1-4alkoxysilanes such as 2-[N-(2-aminoethyl)amino]ethyltrimethoxysilane, 3-[N-(2-aminoethyl)amino]propyltrimethoxysilane, and 3-[N-(2-aminoethyl)amino]propyltriethoxysilane, (aminoC2-4alkyl)aminodiC2-4alkyldiC1-4alkoxysilanes such as 3-[N-(2-aminoethyl)amino]propylmethyldimethoxysilane and 3-[N-(2-aminoethyl)amino]propylmethyldiethoxysilane, and the like], alkoxysilanes having mercapto groups (mercaptoC2-4alkyltriC1-4alkoxysilanes such as 2-mercaptoethyltrimethoxysilane, 3-mercaptopropyltrimethoxysilane, and 3-mercaptopropyltriethoxysilane, mercaptodiC2-4alkyldiC1-4alkoxysilanes such as 3-mercaptopropylmethyldimethoxysilane and 3-mercaptopropylmethyldiethoxysilane, and the like), alkoxysilanes having vinyl groups (vinyltriC1-4alkoxysilanes such as vinyltrimethoxysilane and vinyltriethoxysilane), and alkoxysilanes having ethylenically unsaturated bond groups [(meth)acryloxyC2-4alkyltriC1-4alkoxysilanes such as 2-(meth)acryloxyethyltrimethoxysilane, 2-(meth)acryloxyethyltriethoxysilane, 3-(meth)acryloxypropyltrimethoxysilane, and 3-(meth)acryloxypropyltriethoxysilane, (meth)acryloxydiC2-4alkyldiC1-4alkoxysilanes such as 3-(meth)acryloxypropylmethyldimethoxysilane and 3-(meth)acryloxypropylmethyldiethoxysilane, and the like]. Among the silane coupling agents, alkoxysilane compounds having amino groups are preferable, and aminopropyltrimethoxysilane is particularly preferable. These silane coupling agents can be used singly or in combination of two or more kinds thereof.

The percentage content of the silane coupling agent in the protective layer is 5.0 by weight or less, preferably 2.0 to 4.5% by weight, still more preferably about 3.0 to 4.0% by weight.

In the case of forming a protective layer using a resin composition for protective layer, a coating liquid (application liquid) containing the composition and an organic solvent may be prepared, applied to a substrate film, and dried. As the organic solvent, a single or mixed solvent selected from alcohols such as methanol, ethanol and isopropyl alcohol (IPA), ketones such as acetone and methyl ethyl ketone, ethers such as propylene glycol monomethyl ether and propylene glycol monomethyl ether acetate, or esters such as ethyl acetate and propyl acetate can be used, and methyl ethyl ketone and ethyl acetate are preferable from the viewpoint of film coating and odor.

The coating method of the resin composition for protective layer is not particularly limited as long as it is a method for coating the film surface to form a layer. For example, normal coating methods such as gravure coating, reverse roll coating, wire bar coating, and die coating can be employed. From the viewpoint of productivity and coating stability, wire bar coating and gravure coating are suitably used.

In the present invention, by adopting specific process conditions when the protective layer is applied and dried as follows, it is possible to obtain a predetermined heat shrinkage rate in the laminated film and to reduce variation in the heat shrinkage rate in the transverse direction.

When the protective layer is formed, it is preferable to apply the resin composition for a protective layer and then heat and dry the resin composition, and the drying temperature at that time is preferably 110 to 210°C, more preferably 115 to 205°C, and still more preferably 120 to 200°C. When the drying temperature is less than 110°C, the protective layer may be insufficiently dried or coagulated by heat and the surface hardness may fall outside the predetermined range. As a result, the close contact properties and the water resistance of the protective layer when subjected to boiling or retorting may decrease. Meanwhile, when the drying temperature exceeds 210°C, the cohesion of the protective layer may progress too much, resulting in a hard film, and this may destroy the barrier layer and decrease barrier performance. Too much heat may be applied to the film itself, which is the substrate, and the film may become brittle or contract, resulting in poor workability. Separately from drying, it is also effective to perform additional heat treatment (for example, 150°C to 190°C) in advancing the drying of the protective layer.

The drying time of the protective layer is preferably 30 seconds or less. When the drying time exceeds 30 seconds, not only the protective layer dries, but also the substrate film contracts, causing cracking in the gas barrier layer and decreasing gas barrier performance. Meanwhile, when the drying time is shorter than 5 seconds, the protective layer is not cured, resulting in decreases in close contact properties and barrier properties. From the viewpoint of productivity, the drying time is still more preferably 5 to 25 seconds, more preferably 10 to 20 seconds. When the film is rapidly heated, the film contracts significantly, generating compressive stress in the gas barrier layer and decreasing barrier performance. It is preferable to raise the temperature at a rate of 50°C/sec or less. The temperature is raised at a rate of still more preferably 30°C/sec or less, more preferably 20°C/sec or less.

The surface temperature during heating in the step of forming the protective layer is preferably 100 to 150°C, still more preferably 105 to 145°C, more preferably 110 to 140°C.

The film tension during heating in the step of forming the protective layer is preferably 30 to 90 N/m. The film tension during heating is still more preferably 40 to 80 N/m, more preferably 50 to 70 N/m. Poor winding occurs when the film tension during heating is less than 20 N/m, and tensile stress is generated in the gas barrier layer and the barrier performance decreases when the film tension during heating exceeds 100 N/m.

The MD heat shrinkage rate before and after retorting at 130°C for 30 minutes after a laminated film is fabricated is required to be 0.0% or more and 1.2% or less, and is usually preferably 0.1% or more and 1.1% or less, more preferably 0.2% or more and 1.0% or less, still more preferably 0.3% or more and 0.9% or less. The difference Δ in MD heat shrinkage rate in the transverse direction is preferably 0.3% or less, still more preferably 0.2% or less, more preferably 0.1% or less. The TD heat shrinkage rate is preferably -0.5% or more and 0.4% or less, still more preferably -0.4% or more and 0.3% or less, more preferably -0.3% or more and 0.2% or less.

Even if the heat shrinkage rates in the MD direction and TD direction of the substrate film having an inorganic thin film layer vary in the transverse direction, a heat shrinkage rate without variation in the transverse direction can be obtained by performing drying at a predetermined temperature having a variation of Δ3°C in the transverse direction and a predetermined tension in the step of forming the protective layer.

### [Heat seal layer]

In the case of using a gas barrier laminated film including an inorganic thin film layer as a packaging material, it is preferable to form a heat seal layer called a sealant. The heat seal layer is usually provided on the inorganic thin film layer, but may be provided on the outside of the substrate film (the surface opposite to the protective layer formed surface). The heat-sealable resin is usually formed by an extrusion lamination method or a dry lamination method. A thermoplastic polymer that forms the heat-sealable resin layer may be any one as long as it can sufficiently exert the adhesive properties of sealant, and polyethylene resins such as HDPE, LDPE or LLDPE, a polypropylene resin, an ethylene-vinyl acetate copolymer, an ethylene-α-olefin random copolymer, an ionomer resin, and the like can be used. In the case of performing heat-moisture treatment such as retorting, it is preferable to form the heat seal layer by a dry lamination method using polypropylene resin. The heat seal layer is usually recommended to be 20 to 250 µm, and is desirably 40 to 100 µm in the case of being used as a packaging material.

A polyurethane resin, a polyisocyanate resin, a polyester resin, an ether resin, and the like are used to bond the protective layer and the heat seal layer together. In the case of performing heat-moisture treatment such as retorting, it is preferable to use a reaction product of a polyurethane resin and a polyisocyanate resin as the adhesive. The coated amount varies depending on the material of the film to be bonded, but is preferably 1 to 20 g/m², still more preferably 2 to 10 g/m², more preferably 3 to 6 g/m². The bonding temperature is set depending on the thickness of the heat seal layer and the thickness of the adhesive, but is preferably 50 to 120°C, still more preferably 55 to 100°C, more preferably 60 to 80°C.

As described above, the laminated film of the present invention exhibits excellent water vapor barrier properties and appearance both in normal state and after retorting, exhibits favorable adhesive properties when subjected to processing such as printing and lamination, and further becomes a gas barrier laminated film (laminated film) that is easily manufactured and has excellent economic efficiency.

### [Other layers]

A gas barrier laminated film that includes an inorganic thin film layer and is obtained using the laminated film of the present invention can be provided with various layers that are included in known gas barrier laminated films, if necessary, in addition to the substrate film, inorganic thin film layer, and protective layer. For example, a polyamide resin as an intermediate layer may be provided between the gas barrier laminated film and the heat seal layer to improve the close contact properties and flexibility of the laminated body. A covering layer may be provided to improve close contact properties by reacting the covering layer with oxygen-deficient moieties of inorganic oxides and metal hydroxides generated during formation of the inorganic thin film layer.

Furthermore, in the gas barrier laminated film including an inorganic thin film layer, at least one or more printed layers, other plastic substrates and/or paper substrates may be laminated between the inorganic thin film layer or substrate film and the heat-sealable resin layer, or outside thereof.

As a printing ink for forming the printed layer, an aqueous or solvent-based resin-containing printing ink can be preferably used. Herein, examples of a resin used in the printing ink include an acrylic resin, a urethane-based resin, a polyester-based resin, a vinyl chloride-based resin, a vinyl acetate copolymer resin, and mixtures thereof. The printing ink may contain known additives such as an anti-static agent, a light blocking agent, an ultraviolet absorber, a plasticizer, a lubricant, a filler, a coloring agent, a stabilizer, a lubricating agent, an antifoaming agent, a cross-linking agent, an anti-blocking agent, and an antioxidant. The printing method of forming the printed layer is not particularly limited, and known methods such as an offset printing method, a gravure printing method, and a screen printing method may be used. For drying the solvent after printing, known drying methods such as hot wind drying, hot roll drying, and infrared drying may be used.

Meanwhile, as other plastic substrates and paper substrates, a sheet of paper, a polyester resin, a polyamide resin, and a biodegradable resin and the like are preferably used from the viewpoint of obtaining sufficient rigidity and strength of the laminated film. In order to fabricate a film having excellent mechanical strength, a stretched film such as a biaxially stretched polyester film or a biaxially stretched nylon film is preferable.

In particular, in the case of using the gas barrier laminated film including an inorganic thin film layer as a packaging material, a nylon film is preferably laminated between the inorganic thin film layer and the heat-sealable resin layer in order to improve mechanical properties such as pinhole resistance and piercing strength. Here, as the kind of nylon, nylon 6, nylon 66, and m-xylene adipamide and the like are usually used. The thickness of the nylon film is usually 10 to 30 µm, preferably 15 to 25 µm. When the nylon film is thinner than 10 µm, the nylon film may lack strength. Meanwhile, when the nylon film is thicker than 30 µm, the nylon film may be stiff and unsuitable for processing. The nylon film is preferably a biaxially stretched film having a stretch ratio of usually 2 times or more, preferably about 2.5 to 4 times in each of the machine and transverse directions.

The laminated film of the present invention also includes aspects having the above-mentioned respective layers other than the substrate layer, inorganic thin film layer, and protective layer.

The water vapor transmission rate of the laminated film of the present invention is preferably 2.5 g/m²·day or less, more preferably 2.0 g/m²·day or less, still more preferably 1.5 g/m²·day or less. The water vapor transmission rate of the laminated film when subjected to retorting is preferably 2.5 g/m²·day or less, more preferably 2.0 g/m²·day or less, still more preferably 1.5 g/m²·day or less.

### EXAMPLES

Hereinafter, the present invention will be more specifically described with reference to Examples, but the present invention is not limited to the following Examples, and can be appropriately modified and implemented within a range capable of conforming to the previously and posteriorly mentioned gist, and all of these are included in the technical scope of the present invention. Unless otherwise stated, "%" means "% by mass".

The processing methods and evaluation/physical property measurement methods used in each of Examples and Comparative Examples are as follows.

### (1) Method for measuring film surface temperature

A thermocouple (AEROPAK sheathed thermocouple manufactured by Okazaki Manufacturing Company) was used to measure the film surface temperature.

### (2) Fabrication of laminated laminated film for evaluation

On each laminated film, a biaxially stretched nylon film having a thickness of 15 µm ("HARDEN FILM N1102" manufactured by TOYOBO CO., LTD.) and an unstretched polypropylene film having a thickness of 70 µm ("P1146" manufactured by TOYOBO CO., LTD.) as a heat-sealable resin layer were bonded in this order using a polyurethane-based two-component curable adhesive ("TAKELAC (registered trademark) A525S" and "TAKENATE (registered trademark) A50" manufactured by Mitsui Chemicals, Inc. were blended at a ratio of 13.5 : 1 (mass ratio)) by a dry lamination method, and aging was performed at 40°C for 4 days to obtain a laminated gas barrier laminated film for evaluation. The thickness of the adhesive layer formed of the urethane-based two-component curable adhesive after drying was about 4 µm in all cases. Samples were cut out at intervals of 500 mm in the transverse direction, and the water vapor transmission rate was measured.

### (3) Retorting method

The laminated film or the laminated body obtained in (2) above was subjected to retorting at 130°C for 30 minutes using a hot water spray retort sterilizer ("RCS-60SPXTG" manufactured by HISAKA WORKS, LTD.). Thereafter, the laminated film or laminated body was dried in a 40°C room for 1 day to obtain a laminated body.

### (4) Method for evaluating heat shrinkage rate before and after retorting

A film having dimensions of 210 mm in the TD direction × 297 mm in the MD direction was cut out, with the ends located 50 mm inside from both end surfaces of the roll. Furthermore, at the center in the TD direction, a film having dimensions of 210 mm in the TD direction × 297 mm in the MD direction was cut out to be used as a test piece. A 15 mm marked line was attached to the center of the obtained film along the MD direction, and a 10 mm marked line along the TD direction. The interval between the marked lines on the test piece before retorting was measured at an accuracy of 0.1 mm. The test piece was placed in a hot water spray retort sterilizer ("RCS-60SPXTG" manufactured by HISAKA WORKS, LTD.) and treated under heat-moisture conditions at 130°C for 30 minutes. After the test piece was taken out from the apparatus and cooled to room temperature, the length and width were measured at the same locations as those in the first measurement. The dimensional change rate of each test piece was calculated as the percentage of the dimensional change in each of the MD direction and TD direction with respect to the initial value. The average of the measured values in each direction was taken as the dimensional change rate in that direction.

### (5) Method for evaluating water vapor transmission rate

The water vapor transmission rate of the laminated films obtained in (2) and (3) above was measured in an atmosphere having a temperature of 40°C and a relative humidity of 90% in conformity with JIS-K7129 using a water vapor transmission rate analyzer ("PERMATRAN-3/33MW" manufactured by MOCON). The water vapor transmission rate was measured in the direction in which water vapor permeated from the substrate film side on which the protective layer was not laminated to the protective layer side.

### (6) Method for evaluating appearance

The appearance of the wound roll after the coating liquid was applied by a roll method was visually examined.

Each material used in the formation of protective layer in each of Examples and Comparative Examples was prepared as follows.

### <Preparation of material used in formation of protective layer A (coating liquid a)>

In 70% of methyl ethyl ketone, 30% of a polyester resin having a number average molecular weight of 450 to 3,000 (polyester of which the main components are a polycarboxylic acid component containing at least one ortho-oriented aromatic dicarboxylic acid or its anhydride and a polyhydric alcohol component) was dissolved (polyester solution). A solution of a silane coupling agent (KBM-603 manufactured by Shin-Etsu Chemical Co., Ltd.) dissolved in acetone and a trimethylolpropane adduct of m-xylylene diisocyanate ("TAKENATE D-110N" manufactured by Mitsui Chemicals, Inc.: solid concentration 75%) were mixed together and stirred for 10 minutes using a magnetic stirrer. The obtained liquid mixture was diluted with methyl ethyl ketone, and the polyester solution was added to obtain a polyester urethane coating liquid a having a solid concentration of 5%.

### <Preparation of material used in formation of protective layer B (coating liquid b)>

In 35% of propyl acetate and 40% of ethyl acetate, 25% of a polyester resin having a weight average molecular weight of 35,000 (polyester of which the main components are terephthalic acid, isophthalic acid, ethylene glycol and propylene glycol) was dissolved (polyester solution). Mixed were 14.00% of the solution, 41.40% of ethyl acetate, and 43.10% of propyl acetate, 1.30% of a polyisocyanate having an isocyanate group (CORONATE L manufactured by Nippon Polyurethane Industry Co.,Ltd.), and 0.2% of a silane coupling agent ("KBM-903" manufactured by Shin-Etsu Chemical Co., Ltd.) to obtain a polyester urethane coating liquid b having a solid concentration of 5%.

### <Preparation of material used in formation of protective layer C (coating liquid c)>

Polymethacrylic acid having a weight average molecular weight of 30,000 was diluted with an ethyl acetate/isopropyl alcohol mixed solvent (ethyl acetate/isopropyl alcohol = 1 : 1 (mass ratio)) to obtain a polymethacrylic acid coating liquid c having a solid concentration of 5%.

### (Example 1)

The inorganic thin film layer of a biaxially stretched polyester film that had a thickness of 12 µm and a width of 1,000 mm, was subjected to the measurement of heat shrinkage rate in the MD and TD directions in advance, and had a 10 nm inorganic thin film layer formed of aluminum oxide, was coated with the obtained coating liquids a to c by a roll method. The temperature was raised and lowered at a rate of temperature rise of 20°C/sec or less so that the residence time in the oven was 10 seconds to perform drying so that the film surface temperature was as shown in Table 1, whereby a protective layer was obtained. The applied amount after drying was 0.3 g/m². The tension after passing through the dryer was set to 50 N/m by adjusting the rotational speed ratio of the rolls before and after the oven. In the manner described above, a laminated film including a resin substrate/inorganic thin film layer/protective layer was fabricated. The heat shrinkage rates in the MD and TD directions of the obtained laminated film were measured, and a laminated laminated body was fabricated as described above. Furthermore, retorting was performed at 130°C for 30 minutes, and changes in water vapor transmission rate were evaluated. The results are presented in Table 1.

### (Examples 2 to 4)

Laminated bodies were fabricated in the same manner as in Example 1 except that the protective layer, the film surface temperature, and the tension after passing through the furnace were changed as shown in Table 1, and the water vapor transmission rate was evaluated.

### (Example 5)

A laminated body was fabricated in the same manner as in Example 1 except for using a biaxially stretched polyester film on which inorganic vapor-deposited layers having different film widths were formed, and the water vapor transmission rate was evaluated.

### (Comparative Examples 1 and 2)

Laminated bodies were fabricated in the same manner as in Example 1 except that the film surface temperature and the tension after passing through the furnace were changed as shown in Table 1, and the water vapor transmission rate was evaluated, as a result, the value after retorting decreased.

### (Comparative example 3)

The film after coating severely wrinkled in a case where the film surface temperature was as shown in Table 1, and when a laminated body was fabricated in the same manner as in Example 1 and the water vapor transmission rate was evaluated, the value decreased even before retorting.

### (Comparative Example 4)

In a case where the film surface temperature was as shown in Table 1, the film surface after processing was tacky and the evaluation could not be performed.

### (Comparative Example 5)

In a case where the tension after passing through the dryer was as shown in Table 1, the tension value was so low that the film could not be wound onto a roll.

### (Comparative Example 6)

A laminated body was fabricated in the same manner as in Example 1 except that the protective layer was changed as shown in Table 1, and the water vapor transmission rate was evaluated, as a result, the value after retorting decreased.

### (Comparative Example 7)

A laminated body was fabricated in the same manner as in Example 1 except that a biaxially stretched polyester film having an inorganic thin film layer formed of aluminum oxide was not coated with a coating liquid but subjected to only a drying step, and the water vapor transmission rate was evaluated, as a result, the value decreased even before retorting.

**[Table 1A]**

| | Protective layer lamination condition | | | | | | Before protective layer lamination | | | | | | |
|---|---|---|---|---|---|---|---|---|---|---|---|---|---|
| | Film width [mm] | Protective layer | Film surface temperature [°C] | | | Tension after passing through dryer [N/m] | Appearance | Heat shrinkage rate before and after retorting at 130°C for 30 minutes | | | | | |
| | | | | | | | | MD direction | | | TD direction | | |
| | | | Maximum in transverse direction | Minimum in transverse direction | Δ (maximum - minimum) | | | Maximum in transverse direction | Minimum in transverse direction | Δ (maximum - minimum) | Maximum in transverse direction | Minimum in transverse direction | Δ (maximum - minimum) |
| Example 1 | 1,000 | A | 130 | 129 | 1 | 60 | Favorable | 1.5% | 1.0% | 0.5% | 0.0% | -0.4% | 0.4% |
| Example 2 | 1,000 | A | 136 | 134 | 2 | 50 | Favorable | 1.6% | 1.0% | 0.6% | 0.0% | -0.3% | 0.3% |
| Example 3 | 1,000 | A | 131 | 130 | 1 | 40 | Favorable | 1.5% | 1.1% | 0.4% | 0.1% | -0.4% | 0.5% |
| Example 4 | 1,000 | B | 131 | 130 | 1 | 50 | Favorable | 1.5% | 1.0% | 0.5% | 0.0% | -0.4% | 0.4% |
| Example 5 | 2,500 | A | 130 | 128 | 2 | 50 | Favorable | 1.6% | 1.0% | 0.6% | 0.0% | -0.4% | 0.4% |
| Comparative Example 1 | 1,000 | A | 129 | 129 | 0 | 100 | Favorable | 1.4% | 1.0% | 0.4% | 0.1% | -0.3% | 0.4% |
| Comparative Example 2 | 1,000 | A | 121 | 120 | 1 | 40 | Favorable | 1.5% | 1.1% | 0.4% | 0.0% | -0.4% | 0.4% |
| Comparative Example 3 | 1,000 | A | 156 | 153 | 3 | 60 | Favorable | 1.5% | 1.0% | 0.5% | 0.0% | -0.4% | 0.4% |
| Comparative Example 4 | 1,000 | A | 90 | 90 | 0 | 50 | Favorable | 1.4% | 1.0% | 0.4% | 0.1% | -0.4% | 0.5% |
| Comparative Example 5 | 1,000 | A | 131 | 129 | 2 | 20 | Favorable | 1.4% | 0.9% | 0.5% | -0.1% | -0.4% | 0.3% |
| Comparative Example 6 | 1,000 | c | 136 | 135 | 1 | 50 | Favorable | 1.5% | 1.0% | 0.5% | 0.0% | -0.4% | 0.4% |
| Comparative Example 7 | 1,000 | - | 130 | 129 | 1 | 50 | Favorable | 1.5% | 1.0% | 0.5% | 0.0% | -0.4% | 0.4% |

**[Table 1B]**

| | After protective layer lamination | | | | | | | After lamination | |
|---|---|---|---|---|---|---|---|---|---|
| | Appearance | Heat shrinkage rate before and after retorting at 130°C for 30 minutes | | | | | | WVTP [g/m²·day] | |
| | | MD direction | | | TD direction | | | Before heat-moisture treatment | After heat-moisture treatment |
| | | Maximum in transverse direction | Minimum in transverse direction | Δ (maximum - minimum) | Maximum in transverse direction | Minimum in transverse direction | Δ (maximum - minimum) | Maximum in transverse direction | Maximum in transverse direction |
| Example 1 | Favorable | 1.1% | 0.8% | 0.3% | -0.1% | -0.3% | 0.2% | 1.0 | 1.3 |
| Example 2 | Favorable | 1.0% | 0.8% | 0.2% | 0.0% | -0.2% | 0.2% | 0.8 | 1.0 |
| Example 3 | Favorable | 0.8% | 0.7% | 0.1% | -0.1% | -0.2% | 0.1% | 0.7 | 0.8 |
| Example 4 | Favorable | 1.1% | 0.7% | 0.4% | 0.0% | -0.3% | 0.3% | 1.7 | 1.9 |
| Example 5 | Favorable | 1.2% | 0.8% | 0.4% | 0.0% | -0.4% | 0.4% | 1.6 | 2.0 |
| Comparative Example 1 | Favorable | 1.7% | 1.1% | 0.6% | -0.3% | -0.5% | 0.2% | 1.2 | 4.5 |
| Comparative Example 2 | Favorable | 1.4% | 1.1% | 0.3% | -0.3% | -0.5% | 0.2% | 1.2 | 3.2 |
| Comparative Example 3 | Wrinkling | 1.2% | 0.8% | 0.4% | -0.2% | -0.3% | 0.1% | 3.2 | 3.4 |
| Comparative Example 4 | Tacky | - | - | - | - | - | - | - | - |
| Comparative Example 5 | Poorly wound | - | - | - | - | - | - | - | - |
| Comparative Example 6 | Favorable | 1.1% | 0.8% | 0.3% | 0.0% | -0.2% | 0.2% | 0.8 | 2.9 |
| Comparative Example 7 | Wrinkling | 1.6% | 0.9% | 0.7% | -0.1% | -0.6% | 0.5% | 3.9 | 3.8 |

### INDUSTRIAL APPLICABILITY

According to the present invention, it is possible to provide a laminated film exhibiting excellent gas barrier properties not only in normal state but also after retorting. The gas barrier laminated film of the present invention has advantages that the film is easily manufactured, has excellent economic efficiency and production stability, and is likely to exhibit homogeneous properties. The gas barrier laminated film of the present invention can easily cope with a wide variety of products and small lots in terms of improvement during the process. Consequently, the gas barrier laminated film can be used not only for food product packaging for retorting, but also for packaging applications of various food products, pharmaceuticals, industrial products and the like and for a wide range of industrial applications such as solar cells, electronic paper, organic EL devices, and semiconductor devices.

## Claims

1. A laminated film exhibiting gas barrier properties, the laminated film comprising:
a resin substrate;
an inorganic thin film layer laminated on at least one side of the resin substrate; and
a protective layer laminated on the inorganic thin film layer, wherein
the following requirements (1) to (3) are satisfied:
(1) a layer is not provided between the resin substrate and the inorganic thin film layer,
(2) a heat shrinkage rate in an MD direction before and after retorting at 130°C for 30 minutes is 1.2% or less, and
(3) a water vapor transmission rate is 2.5 g/m²·day or less after a 15 µm biaxially stretched nylon film and a 70 µm unstretched polypropylene film are coated with a polyurethane-based two-component curable adhesive in a thickness of 4 µm after drying, bonded together by a dry lamination method, and laminated on a protective layer surface of the laminated film, aging is performed at a temperature of 40°C for 4 days, and then a heat-moisture treatment is performed at 130°C for 30 minutes.

2. The laminated film according to claim 1, wherein the laminated film has a film width of 1,000 mm or more and a difference Δ between a maximum MD shrinkage rate and a minimum MD shrinkage rate in a transverse direction of 0.4% or less during retorting at 130°C for 30 minutes.

3. The laminated film according to claim 1 or 2, wherein the inorganic thin film layer contains at least one or more kinds of inorganic oxides including silicon oxide and/or aluminum oxide.

4. The laminated film according to any one of claims 1 to 3, wherein the protective layer contains at least one or more kinds of urethane resins or ester resins.

5. The laminated film according to any one of claims 1 to 4, wherein the protective layer contains a silane coupling agent.

6. A laminated body comprising a heat seal layer laminated on a protective layer surface of the laminated film according to any one of claims 1 to 5.

7. A package comprising the laminated body according to claim 6 at least at a part.
